# EUROPÄISCHE PATENTANMELDUNG

(11) **EP 1 560 040 A2**
(43) Veröffentlichungstag der Anmeldung: **03.08.2005**
(21) Anmeldenummer: 05001084.2
(22) Anmeldetag: 20.01.2005
(51) Int. Cl.: G01S 13/93

(54) **Fahrzeug- Rückwärtsfahrthilfseinrichtung**

(30) Priorität: 30.01.2004 DE 202004001473 U
(71) Anmelder: ASPÖCK Systems GmbH, 4722 Peuerbach (AT)
(72) Erfinder: Klaffenböck, Dipl.-Ing. Martin, A-4784 Schardenberg (AT)
(74) Vertreter: Strasse, Joachim, Dipl.-Ing.

(57) **Zusammenfassung**

Die Erfindung bezieht sich auf eine Einrichtung zum Erleichtern des Rückwärtsanfahrens von Lastkraftwagen (10), insbesondere aus Zugmaschine und Hänger oder Aufleger bestehenden langen Zügen (10) an eine Laderampe (24) oder ein Hindernis. Wie üblich sind hierzu am Heck (12) des Zuges (10) Sensoren (20) angebracht, der Wellen und Wellenreflexion (22) über eine Auswertschaltung (26) die Laufzeit der Wellenreflexion und damit den Abstand zur Rampe (24) oder einem Hindernis bestimmen und in optische und/oder akustische Signale umwandeln. Die Auswertschaltung (26) und die akustischen (28) und optischen (30) Signalgeber bilden hierbei eine vom Fahrerhaus (16) unabhängige, autonome Einheit (14) am Heck (12) des Fahrzeugs oder Fahrzeugzuges (Figur 1).

## Beschreibung

Die vorliegende Erfindung bezieht sich auf eine Einrichtung um das Rückwärtsanfahren insbesondere mit einem Auflegerfahrzeug an eine Laderampe zu erleichtern. Im modernen Lieferverkehr spielt jede Zeitersparnis eine große Rolle. Lieferfahrzeuge sollen schnell und sicher an eine Laderampe zum Beladen oder Entladen rückwärts herangefahren werden. Hierbei werden auch immer häufiger Fahrzeuge mit Aufleger eingesetzt, weil man mit einer Zugmaschine mehrere Aufleger betreiben kann. Wenn eine Zugmaschine beispielsweise einen Aufleger an eine Laderampe heranrangiert hat, um ihn beladen zu lassen, kann mit derselben Zugmaschine ein bereits beladener Aufleger weggefahren werden.

Nun ist es schon bei schlecht zugänglichen Rampen bereits schwierig, einen normalen Lastwagen rückwärts an eine Rampe herzulenken. Umso schwieriger lässt sich dieses Manöver bei einem Gelenkzug schnell ausführen. Seit längerem werden als Anfahrhilfe für dieses Manöver Rückwärtsfahrsensoren eingesetzt. Diese messen beim Annähern an eine Laderampe den jeweils verbleibenden Abstand vom Heck des Fahrzeugs zur Rampe und zeigen diesen Abstand mit optischen oder akustischen Signalen im Fahrerhaus an. Bei Auflegern muss dann, wenn die Zugmaschine abgekoppelt wird, die Signalverbindung zum Fahrerhaus gelöst werden. Außerdem sind die bekannten Anfahrhilfen aus anderen Gründen teuer und aufwendig. Aus der DE 198 31 262 A1 ( entsprechend EP 0972679 ) ist eine Einrichtung zur Unterstützung des Fahrers eines Fahrzeuges beim Rückwärtsfahren bekannt. Hierbei wird ein zu einem Hindernis charakterisierendes Abstandssignal ausgewertet, wobei in Abhängigkeit von diesem Signal die Geschwindigkeit des Fahrzeuges automatisch beeinflusst wird. Diese Automatik wirkt auf die Geschwindigkeitsregelung und das Bremssystem des Fahrzeugs, ohne dass der Fahrer einzugreifen braucht. Das führt zu einer Kompliziertheit und Verteuerung der Anfahrhilfe. Außerdem besteht ein erhebliches Anpassungsproblem beim Wechseln des Anhängers oder Auflegers, da Motorleistung- und Einstellung des Bremssystem bei jedem Wechsel adjustiert werden müssen, um sicherzustellen, dass bei einer gewechselten Kombination von Zugmaschine und Hänger oder Aufleger die Automatik zuverlässig eingestellt ist.

Es besteht daher die Aufgabe, eine Anfahrhilfe verfügbar zu machen, die einfach ist und wenig Aufwand erfordert. Diese Aufgabe wird erfindungsgemäß durch eine Einrichtung mit am Heck angebrachten Sensoren gelöst, deren Wellen und Wellenreflexion in einer Schaltung über Auswertung der Laufzeit den Abstand zur Rampe bestimmen und in optische und/oder akustische Signale umwandeln. Diese optischen und akustischen Signale werden am Heck des Fahrzeugzuges abgegeben, unabhängig von Einrichtungen im Fahrerhaus, an der Motorsteuerung oder der Bremsanlage nur in Abhängigkeit von dem sich ändernden Abstand vom Heck zur Rampe oder einem anderen Hindernis. Der Fahrer selbst bleibt selbst derjenige, der lenkt, den Motor beeinflusst oder bremst. Er erhält vom Heck her beim gewohnten Blick nach hinten lediglich akustische und optische Hilfesignale. Diese Hilfe wirkt unabhängig von der Konstellation einer Zugmaschine zu einem beliebigen Hänger oder Aufleger, der mit dem einfachen und autarken Hilfesystem ausgerüstet ist. Ein Wechsel bedingt keine neuen Einstellungen. Das Besondere besteht mithin in der Einfachheit, damit einer kostengünstigen Einrichtung, die auch leicht nachgerüstet werden kann und in ihrer Flexibilität. Das resultiert daraus, dass eine Auswertschaltung und die akustischen und optischen Signalgeber eine vom Fahrerhaus unabhängige Einheit am Heck des Fahrzeugs bilden.

Weitere Einzelheiten, Vorteile und Merkmale der Erfindung ergeben sich aus der folgenden Beschreibung eines in der Zeichnung schematisch dargestellten Ausführungsbeispiels, sowie aus den anschließenden Ansprüchen.

Es zeigen:
Figuren 1 eine schematische Draufsicht auf ein Sattelschlepperfahrzeug mit der erfindungsgemäßen Anfahrhilfe,
Figur 2 eine schematische Gegenüberstellung der einzelnen Phasen des Rückwärtsanfahrens eines Fahrzeughecks an eine Rampe,
Figur 3 eine schematische Darstellung der Verkabelung des autarken Systems am Heck und
Figur 4 eine Einzelheit der justierbaren Ultraschallsensoren.

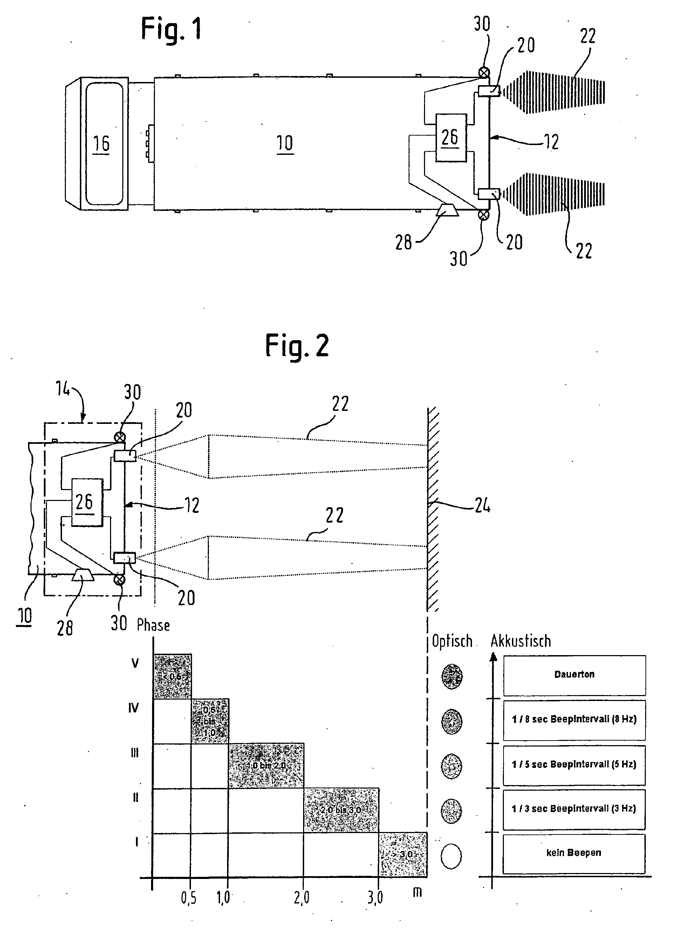

Das in Figur 1 schematisch dargestellte Fahrzeug besteht aus einem Aufleger 10, der mit seinem Heck 12 rückwärts an eine Rampe von einer Zugmaschine 16 gesteuert werden soll. Um dieses Anfahrmanöver mit einer einfachen einheitlichen Einrichtung 14 zu erleichtern, ist das Heck 12 in üblicher Weise mit Sensoren 20 ausgestattet die ihre Wellen 22 in Richtung auf eine Rampe aussenden und den Wellenreflex empfangen.

Die eigentliche Funktionsweise geht aus Figur 2 hervor.

Zur Einheit 14, die autark und nicht mit dem Fahrerhaus 16 in Verbindung steht, gehören außer den Sensoren 20 eine mit diesen verbundene Auswertschaltung 26 und zwei Signalgeber 28,30, die sich ebenfalls ausschließlich am Heck 12 des Auflegers 10 befinden. Es handelt sich um einen akustischen Signalgeber 28 und einen oder mehrere optische Signalgeber 30. Im vorliegenden Beispiel sind zwei optische Signalgeber 30 eingezeichnet. Es handelt sich dabei nicht um zusätzlich vorgesehen Leuchten, sondern es werden die ohnehin vorhandenen Umrißleuchten oder Heckbegrenzungsleuchten benutzt.

Der akustische Signalgeber befindet sich seitlich am Heck 12 auf der Fahrerseite und kann daher vom Fahrer gut wahrgenommen werden. Zudem wird jeder Fahrer beim Rückwärtsfahren zumeist bei offnem Fenster entweder direkt oder über den Spiegel das Heck 12 seines Fahrzeugs im Auge behalten, schon um bei dieser Fahrweise nicht andere Gegenstände oder gar Personen zu gefährden.

Der Fahrer braucht auch nur das Standlicht einzuschalten, um die optischen Signalgeber leuchten zu lassen. Sobald der Rückwartsgang eingelegt wird, aktiviert das Rückwartsfahrlicht oder ein die Drehung der Hinterräder überwachender Sensor die Einheit 14 mit der Auswertschaltung 26. Die Wellen 22 treffen auf eine Rampe 24 und die reflektierten Wellen werden wieder empfangen. Die Laufzeit wird in einer Recheneinheit der Auswertschaltung 26 bestimmt, in die Abstandgröße umgerechnet und in Ausgabesignale umgewandelt. Diese werden aber nicht zum Fahrerhaus geliefert, sondern am Heck 12 optisch und akustisch mit qualitativen Unterschieden angezeigt. Dies erfolgt einerseits akustisch über den an der Seite des Hecks 12 angebrachten Lautsprecher 28, der auf der Fahrerseite befindet und unüberhörbar Pieptöne aussendet. Außerdem werden die zumeist ohnehin vorhandenen seitlichen Heckbegrenzungsleuchten 30 (nach vorn weiß, nach hinten rot) mit den abstandsadäquaten Signalen beaufschlagt und zum Blinken gebracht.

Aus dem unteren Teil der Fig. 2 geht beispielhaft die Qualität der Signale in Abhängigkeit vom Abstand zwischen Heck 12 und Rampe 24 in Stufen I bis V hervor. Beim Abstand von mehr als 3 m erfolgt noch kein Signal, weder akustisch noch optisch. Zwischen 2 und 3 m erfolgt ein 3 Hz-Ton und/oder ein Tonintervall von einer 1/3 Sekunde und optisch ein Leuchten mit etwa ein Viertel der vollen Leuchtstärke. Zwischen 1 bis 2 m Abstand erfolgt ein 5 Hz-Ton und/oder ein Tonintervall von einer 1/5 Sekunde und optisch ein Leuchten mit etwa der halben vollen Leuchtstärke. Zwischen einem Abstand von 0,5 bis 1 m erfolgt ein 8 Hz-Ton und/oder ein Tonintervall von einer 1/8 Sekunde und optisch ein Leuchten mit etwa ein dreiviertel der vollen Leuchtstärke. Unterhalb eines Abstands von einem halben Meter gibt es einen Dauerton und eine volle Lichtstärke als Dauerleuchten. Selbstverständlich können die hier beispielhaft gewählten Abstände und Stufen auch abweichend vom Beispiel gewählt werden. Es können feinere Stufen oder größere Abstände gewählt werden.

Wichtig ist, dass das System für LKW - Anhänger oder Aufleger, autonom und selbstständig am Heck funktioniert. Es ist einfach, kostengünstig und kann jederzeit nachträglich am LKW - Anhänger oder Aufleger angebracht werden. Dennoch erhöht das neue System die Sicherheit für das Fahrzeug und die Gegenstände hinter dem Fahrzeug. Es gibt weniger Schadensfälle und Reparaturen. Es erfolgt kein Eingriff in die Motorsteuerung und Bremsanlage und die Handlungsfreiheit des Fahrers ist nicht eingeschränkt. Die preiswerte Anlage kommt mit zwei justierbaren Ultraschallsensoren 20 aus. Wenn nachts an einem Rangierpunkt laute Geräusche unerwünscht sind, lässt sich die akustische Anzeige auch abschalten. Dies kann sogar, ohne die Autonomie der Anlage zu beieinträchtigen, vom Fahrerhaus über die elektrische Beleuchtung umgeschaltet werden, indem der Rückwärtsgang zweimal kurz hinter einander eingelegt wird, was am Heck über die Heckleuchten erkannt und abgegriffen werden kann.

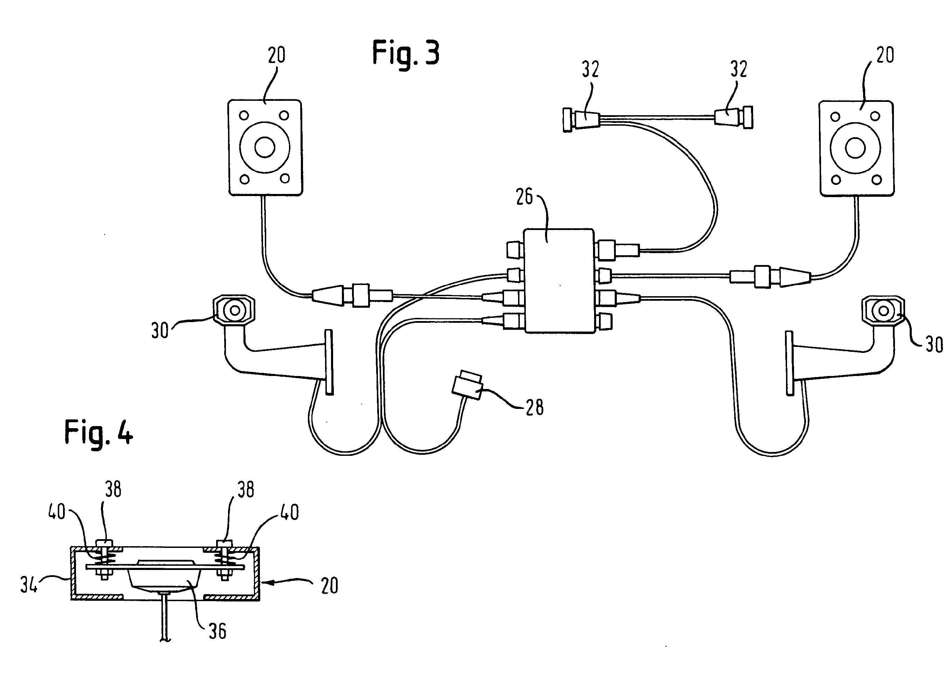

Die Figur 3 verdeutlicht das Baukastensystem für die Anbringung am Heck eines Aufleger oder Anhängers. Es ist ein Bausatz aus den zwei Sensoren, 20 der Auswertschaltung in einem Anschlusskasten 26 und dem akustischen Signalgeber 28 mit einem Kabelverbindungssatz vorgegeben, der nur in die Stromversorgung der Heckleuchten über Anschlüsse 32 eingespleist zu werden braucht. Die ohnehin zumeist vorhanden hinteren Seitenbegrenzungsleuchten werden nicht direkt, sondern über die Anschlüsse 32 und die Auswertschaltung 26 und dem Kabelsatz wieder angeschlossen.

Um einen Ultraschallsensor 36 in seinem Gehäuse 34 (Figur 4) richtig auszurichten oder nachzujustieren ist eine Mehrpunktjustierung aus jeweils Schraube 38 und Feder 40 vorhanden. Um die Justierung nur Fachleuten zu überlassen sind die Schrauben 38 vorteilhafterweise nicht mit einem gewöhnlichen Schraubendreher zu verstellen, sondern nur mit einem zu Bausatz gehörenden Schlüssel zu drehen, der in ein entsprechendes Schloss im versenkten Kopf der Schraube 38 korrespondiert.

Diese einfache und vom Fahrerhaus unabhängige Einrichtung ist eine einfache, preisgünstige und zuverlässige Rampenanfahrhilfe.

## Patentansprüche

1. Einrichtung zum Erleichtern des Rückwärtsanfahrens von Lastkraftwagen, insbesondere aus Zugmaschine und Hänger oder Aufleger bestehenden langen Zügen an eine Laderampe oder ein Hindernis mit am Heck des Zuges angebrachten Sensoren, der Wellen und Wellenreflexion über eine Auswertschaltung die Laufzeit der Wellenreflexion und damit den Abstand zur Rampe oder einem Hindernis bestimmen und in optische und/oder akustische Signale umwandeln, **dadurch gekennzeichnet, dass** die Auswertschaltung (26) und die akustischen (28) und optischen (30) Signalgeber eine vom Fahrerhaus (16) unabhängige Einheit (14) am Heck (12) des Fahrzeugs oder Fahrzeugzuges (10) bilden.

2. Einrichtung nach Anspruch 1, **dadurch gekennzeichnet, dass** an der Fahrerseite am Heck (12) ein Lautsprecher (28) angebracht ist, der qualitativ unterschiedliche und unüberhörbar Pieptöne aussendet und dass als optische Signalgeber die ohnehin vorhandenen seitlichen Heckbegrenzungsleuchten (30) mit den abstandsadäquaten Signalen beaufschlagt und zum Blinken gebracht werden.

3. Einrichtung nach Anspruch 1, **dadurch gekennzeichnet, dass** die Auswertschaltung (26) durch Einlegen des Rückwärtsganges und damit des Einschalten des Rückfahrlichtes oder ein die Drehung der Hinterräder überwachender Sensor aktivierbar ist.

4. Einrichtung nach Ansprüchen 1 und 2, **dadurch gekennzeichnet, dass** die akustische Anzeige (28) abschaltbar ist.

5. Einrichtung nach Anspruch , **dadurch gekennzeichnet, dass** die Abschaltung der akustische Anzeige (28) erfolgt, indem der Rückwärtsgang zweimal kurz hinter einander eingelegt wird, was am Heck über die Heckleuchten erkannt und abgegriffen werden kann.

6. Einrichtung nach einem oder mehreren der vorausgehenden Ansprüche, **dadurch gekennzeichnet, dass** durch eine Mehrpunktjustierung aus jeweils Schraube (38) und Feder (40) ein Ultraschallsensor (36) in seinem Gehäuse (34) (Figur 4) ausrichtbar oder nachjustierbar ist.

7. Einrichtung nach Anspruch 6, **dadurch gekennzeichnet, dass** die Schrauben (38) vor nicht mit einem gewöhnlichen Schraubendreher zu verstellen, sondern nur mit einem zum Bausatz (oder Einheit 14) gehörenden Schlüssel zu drehen ist, der mit in ein entsprechenden Schloss im versenkten Kopf der Schraube 38 korrespondiert.

8. Einrichtung nach Ansprüchen 1 und 2, **dadurch gekennzeichnet, dass**
a. beim Abstand vom Heck (12) zum Hindernis oder einer Rampe (24)von mehr als 3 m die Einrichtung kein Signal erzeugt,
b. beim Abstand zwischen 2 und 3 m die Einrichtung einen 3 Hz-Ton und/oder ein Tonintervall von einer 1/3 Sekunde und optisch ein Leuchten mit etwa ein Viertel der vollen Leuchtstärke erzeugt,
c. beim Abstand zwischen 1 bis 2 m die Einrichtung einen 5 Hz-Ton und/oder ein Tonintervall von einer 1/5 Sekunde und optisch ein Leuchten mit etwa der halben Leuchtstärke erzeugt,
d. beim Abstand zwischen 0,5 bis 1 m die Einrichtung einen 8 Hz-Ton und/oder ein Tonintervall von einer 1/8 Sekunde und optisch ein Leuchten mit etwa ein Dreiviertel der vollen Leuchtstärke erzeugt und
e. bei einem Abstand unterhalb von einem halben Meter die Einrichtung einen Dauerton und eine volle Lichtstärke als Dauerleuchten erzeugt.
